# EUROPEAN PATENT APPLICATION

(11) **EP 3 001 292 A1**
(43) Date of publication of application: **30.03.2016**
(21) Application number: 15020164.8
(22) Date of filing: 17.09.2015
(51) Int. Cl.: G06F 3/041, G06F 3/044

(54) **TOUCH SENSING DEVICE WITH GROUPED ELECTRODES FOR DETERMINATION OF TARGET OBJECTS WITH A PREDETERMINED SIZE**

(30) Priority: 25.09.2014 JP 2014195074
(71) Applicant: Hosiden Corporation, Yao-shi, Osaka 581-0071 (JP)
(72) Inventor: AO, Hitoshi, Osaka 581-0071 (JP); TOYOTA, Naoki, Osaka 581-0071 (JP)
(74) Representative: Beresford, Keith Denis Lewis

(57) **Abstract**

The invention provides a touch sensing device having a simplified controller, with reduced possibility of falsely detecting a conductor other than the detection target if the touch sensing device has an enlarged detection area. A touch sensing device T detects approach of a detection target to a detection area 510a of a sensing face 501. The touch sensing device T includes a base 100, a plurality of detection electrodes 200a, and a controller 400. The base includes a counterpart area 110a at a position of the base 100 corresponding to the detection area 510a, the counterpart area being located on a deeper side in the touch sensing device T relative to the detection area 510a. The detection electrodes 200a are arranged at intervals in the counterpart area 110a. An output signal from each detection electrode 200a changes in response to an approach of the detection to the detection electrode 200a. The controller 400 is connected to the detection electrodes 200a and detects that the detection target approaches the detection area 510a corresponding to the counterpart area 110a when an output signal or signals from a predetermined number of detection electrodes 200a of all the detection electrodes 200a in the counterpart area 110a has changed.

## Description

### Technical Field

The invention relates to touch sensing devices.

### Background Art

A conventional touch sensing device is disclosed in Japanese Unexamined Patent Publication No. 2014-071863. This touch sensing device includes a transparent board, a plurality of detection electrodes, and a controller (control circuit). The detection electrodes are provided at intervals on the transparent board. The controller periodically applies a predetermined voltage to the detection electrodes. When a finger (detection target) approaches to any one of the detection electrodes, there is a change in electrostatic capacitance between the detection electrode and the finger. The change in electrostatic capacitance changes an output signal from the detection electrode. The controller refers to this change in the output signal from the detection electrode to detect the touch position that the finger has touched.

### Summary of Invention

### Technical Problem

This kind of touch sensing devices may be required to enlarge a detection area for detecting touch positions of the detection target on a sensing face, depending on design and/or usability of the devices. This kind of touch sensing devices usually provides one detection electrode for each detection area.

The inventors considered meeting such a requirement by enlarging the outer shape of a detection electrode so as to provide a larger detection area. The enlarged outer shape of the detection electrode allows detection of touch positions of the detection target in a larger detection area but also may cause a false detection. Particularly, in a touch sensing device with enlarged detection electrodes, a detection target (a finger of a user) touches a first detection area while another conductor (e.g. a palm of the user) may be located above a detection electrode in a second detection area. The palm tends to be electrostatically coupled to the detection electrode in the second detection area, even if the palm is located above the detection electrode (i.e. if the palm stays in midair), because the palm has an area several times larger than that of the finger. The electrostatic coupling causes a change in electrostatic capacitance therebetween the detection electrode and the palm. The controller will detect such an electrostatic capacitance change, resulting in a risk of a false detection.

The inventors considered that such false detection can be prevented by raising the threshold for the detection electrode to be stored in a memory of the controller. Specifically, the controller judges a false detection when determining that an output signal from the detection electrode is below the threshold. However, it is necessary to raise the threshold with increasing size of the detection electrode. On the other hand, it is necessary that the threshold remain in such a range that allows detection of an output signal that is output from the detection electrode according to the change in electrostatic capacitance between the detection target and the detection electrode. Meeting all the above conditions would likely to result in complicated configuration of the controller.

The invention is devised in the above circumstances to provide a touch sensing device having a simplified controller, with reduced possibility of falsely detecting a conductor other than the detection target if the touch sensing device has an enlarged detection area.

### Solution to Problem

In a first aspect, the invention provides a touch sensing device as defined in claim 1. A second aspect provides a touch-sensing device as defined in claim 9. The touch sensing device is used for detecting approach of a detection target to a detection area of a sensing face. The touch sensing device includes a base, a plurality of detection electrodes, and a controller. The base includes a counterpart area at a position of the base corresponding to the detection area. The counterpart area is located on a deeper side in the touch sensing device relative to the detection area. The detection electrodes are arranged at intervals in the counterpart area on the base and configured such that an electrostatic capacitance between at least one of the detection electrodes and the detection target changes in response to an approach of the detection target to the at least one detection electrode so as to change an output signal from the at least one detection electrode. The controller is connected to the detection electrodes. The controller is configured to detect that the detection target approaches the detection area corresponding to the counterpart area when an output signal or signals from a predetermined number of the detection electrode or electrodes of all the detection electrodes in the counterpart area has changed, and to generate an output signal when detection of a target has been made. The predetermined number is at least one. If the predetermined number is at least two, the controller may be configured to detect that the detection target approaches the detection area corresponding to the counterpart area when output signals from the predetermined number of detection electrodes of all the detection electrodes in the counterpart area. The predetermined number of electrodes may be selected such that the total area of that number of adjacent electrodes substantially corresponds to the size of the target to be detected. For example, if the intended target corresponds in size to a single electrode, then the predetermined number of electrodes may be set to 1 for a particular detection area. If the intended target corresponds in size to the area of two adjacent electrodes, then the predetermined number of electrodes may be set to 2 for the particular detection area.

The touch sensing device in this aspect provides at least the following technical features and effects. First, it is possible for the following reason to reduce the possibility of falsely detecting a conductor other than a detection target even if the detection area of the sensing face is large and the intended target is small. In a case where the detection target approaches the detection area, this approach changes an output signal or signals from exactly the predetermined number of detection electrode(s) in the counterpart area corresponding to the detection area. In a case where a conductor of a size different from that of an intended detection target approaches the detection area, this approach changes an output signal or signals from a different number (not the predetermined number, i.e., a number smaller or larger than the predetermined number) of detection electrode(s) in the counterpart area corresponding to the detection area. Accordingly, when judging that the former case applies, the controller can detect that the detection target approaches the detection area, and give an output signal to a remote device, for example. Second, the controller can be simplified in configuration. Particularly, the controller can be configured such as to at least detect that the detection target approaches a detection area when an output signal or signals from the predetermined number of the detection electrodes in the counterpart area corresponding to the detection area has changed.

The predetermined number of detection electrodes may have an outer shape of dimensions corresponding to an outer shape of the detection target. The touch sensing device in this aspect can further reduce the possibility of falsely detecting a conductor other than a detection target. More particularly, it is possible to reduce the possibility that an approach of a detection target to the detection area will change an output signal or signals from a number (different from the predetermined number) of detection electrodes in the counterpart area corresponding to the detection area.

The detection electrodes may be of substantially identical shape with each other and arranged at regular intervals in the counterpart area on the base.

A plurality of detection areas may be provided in the sensing face. A plurality of counterpart areas may be provided at positions of the base corresponding to the detection areas. The counterpart areas may be located on a deeper side in the touch sensing device relative to the detection areas. The detection electrodes may be a plurality of sets of detection electrodes. The detection electrodes of each set may be arranged at intervals in each of the counterpart areas on the base.

The touch sensing device in any of the above aspects may further include a sensing face. The sensing face may include a detection area or detection areas for detecting approach of a detection target.

### Brief Description of Drawings

Fig. 1A is a schematic plan view of a touch sensing device in an embodiment of the invention.
Fig. 1B is a sectional view of the touch sensing device, taken along line 1B-1B in Fig. 1A.
Fig. 2 is a schematic plan view of a base, detection electrodes, conductive lines, and a controller of the touch sensing device.
Fig. 3A is a part of a flowchart of a program processed by the controller of the touch sensing device.
Fig. 3B is the remaining part of the flowchart of the program processed by the controller of the touch sensing device.
Fig. 4 is a schematic plan view of a variant of the touch sensing device.

In the brief description of the drawings above and the description of embodiments which follows, relative spatial terms such as "upper", "lower", "top", "bottom", "left", "right", "front", "rear", etc., are used for the convenience of the skilled reader and refer to the orientation of the touch sensing device and its constituent parts as depicted in the drawings. No limitation is intended by use of these terms, either in use of the invention, during its manufacture, shipment, custody, or sale, or during assembly of its constituent parts or when incorporated into or combined with other apparatus.

### Description of Embodiment

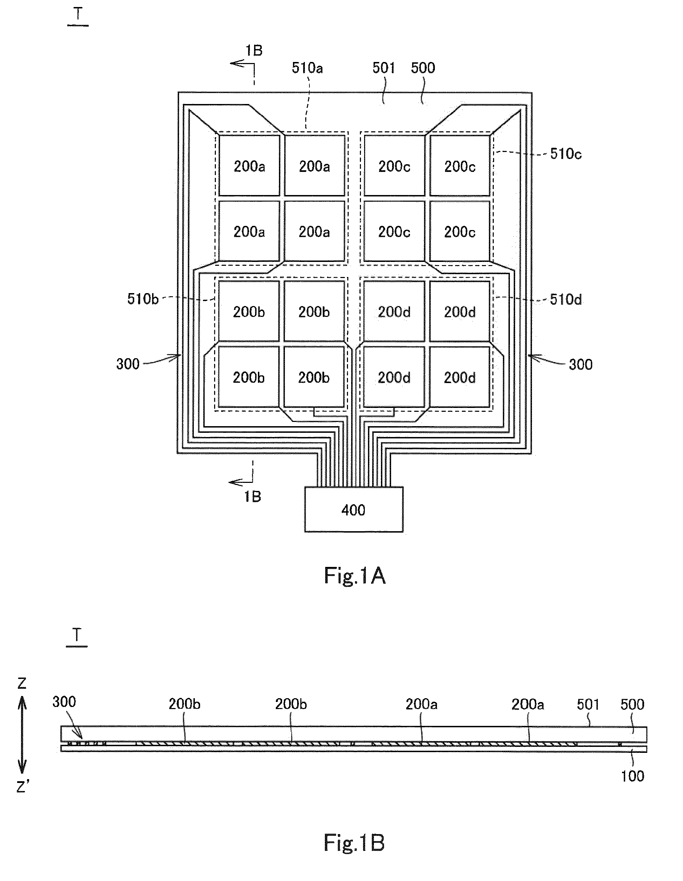

A touch sensing device T in an embodiment of the invention will be described below with reference to Fig. 1A to Fig. 3B. The touch sensing device T is a self-capacitance touch panel. The touch sensing device T includes a base 100, a plurality of detection electrodes 200a, a plurality of detection electrodes 200b, a plurality of detection electrodes 200c, a plurality of detection electrodes 200d, a plurality of conductive lines 300, a controller 400, and a cover panel 500. These constituents of the touch sensing device T will be described in detail below. The Z-Z' direction indicated in Fig. 1B is the thickness direction of the touch sensing device T.

As illustrated in Figs. 1A and 1B, the cover panel 500 faces the base 100 such as to cover the detection electrodes 200a to 200d and the conductive lines 300. The cover panel 500 may be securely fixed to the base 100 such as to cover the detection electrodes 200a to 200d and the conductive lines 300. The cover panel 500 may be made, for example, of an insulating glass sheet, an insulating plastic plate, or an insulating plastic film. The cover panel 500 includes a sensing face 501 and a plurality of detection areas 510a to 510d. The sensing face 501 is the outer surface (the surface on the Z-direction side) of the cover panel 500, i.e. the surface to be touched by a detection target, such as a finger and/or a stylus pen. The sensing face 501 includes the detection areas 510a to 510d at intervals.

The detection areas 510a to 510d are zoned areas for detecting which of the detection areas 510a to 510d is touched by an approaching detection target. In other words, the detection areas 510a to 510d each serve as a touch input area. The detection area 510a is used to detect that an approaching detection target has touched a part of the detection area 510a. The detection areas 510b to 510d can be used likewise. The detection areas 510a to 510d may be visually indicated in the sensing face 501. Alternatively, the detection areas 510a to 510d may not be visually shown but defined as imaginary areas in the sensing face 501. If the touch sensing device T is a touch screen, the detection areas 510a to 510d may be visually displayed on the sensing face 501 by a display part. For the sake of understanding, the detection areas 510a to 510d are indicated with broken lines in Fig. 1A.

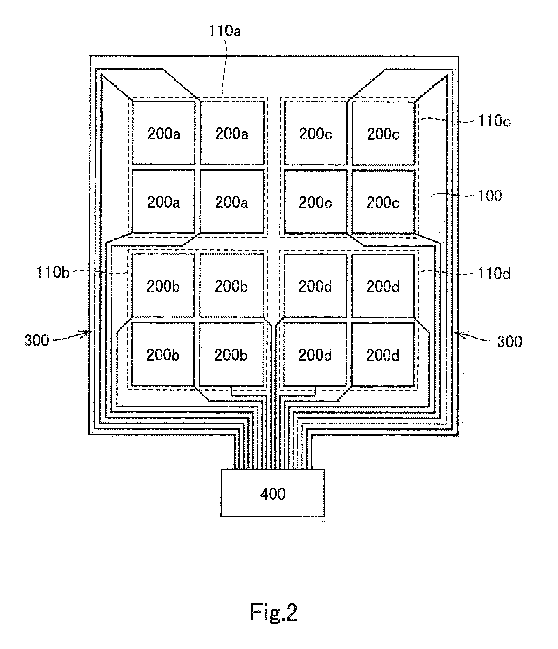

The base 100, best illustrated in Fig. 2, is made of an insulating glass sheet, an insulating plastic plate, or an insulating plastic film. The base 100 may be visually transparent, translucent, or opaque. The base 100 is located on the side deeper than the cover panel 500 (on the side remote from the sensing face 501 of the cover panel 500) in the touch sensing device T.

The base 100 includes counterpart areas 110a to 110d. The counterpart areas 110a to 110d are indicated with broken lines in Fig. 2 for the sake of understanding. The counterpart area 110a is an area corresponding to the detection area 510a. The counterpart area 110a, substantially identical in shape to the detection area 510a, is a part of the base 100 corresponding to the detection area 510a, on the Z'-direction side (on the deeper side) relative to the detection area 510a. The counterpart area 110b is an area corresponding to the detection area 510b. The counterpart area 110b, substantially identical in shape to the detection area 510b, is a part of the base 100 corresponding to the detection area 510b, on the Z'-direction side (on the deeper side) relative to the detection area 510b. The counterpart area 110c is an area corresponding to the detection area 510c. The counterpart area 110c, substantially identical in shape to the detection area 510c, is a part of the base 100 corresponding to the detection area 510c, on the Z'-direction side (on the deeper side) relative to the detection area 510c. The counterpart area 110d is an area corresponding to the detection area 510d. The counterpart area 110d, substantially identical in shape to the detection area 510c, is a part of the base 100 corresponding to the detection area 510d, on the Z'-direction side (on the deeper side) relative to the detection area 510d. It should be appreciated that the counterpart areas 110a to 110d may be visually indicated in the base 100.

The detection electrodes 200a to 200d, best illustrated in Figs. 1 A and 2, are transparent conductive films or other conductors of identical rectangular shape. The detection electrodes 200a to 200d are configured such that the electrostatic capacitance between at least one of the detection electrodes and a detection target varies in response to an approach of the detection target to the at least one detection electrode. The transparent conductive films may be formed of tin-doped indium oxide (ITO), indium-doped zinc oxide (IZO), aluminum-doped zinc oxide (AZO), or conductive polymer such as PEDOT and PSS. The conductors may be of photosensitive silver.

The detection electrodes 200a serve to detect an input given as a touch by a detection target at a point in the detection area 510a. In other words, the detection electrodes 200a do not serve to detect a plurality of touch positions in the detection area 510a by the detection target. The detection electrodes 200a are arranged at regular intervals within the counterpart area 110a on the base 100. The detection electrodes 200b serve to detect an input given as a touch by a detection target at a point in the detection area 510b. In other words, the detection electrodes 200b do not serve to detect a plurality of touch positions in the detection area 510b by the detection target. The detection electrodes 200b are arranged at regular intervals within the counterpart area 110b on the base 100. The detection electrodes 200c serve to detect an input given as a touch by a detection target at a point in the detection area 510c. In other words, the detection electrodes 200c do not serve to detect a plurality of touch positions in the detection area 510c by the detection target. The detection electrodes 200c are arranged at regular intervals within the counterpart area 110c on the base 100. The detection electrodes 200d serve to detect an input given as a touch by a detection target at a point in the detection area 510d. In other words, the detection electrode 200d do not serve to detect a plurality of touch positions in the detection area 510d by the detection target. The detection electrodes 200d are arranged at regular intervals within the counterpart area 110d on the base 100.

In the detection electrodes 200a of counterpart area 110a, a predetermined number of detection electrodes 200a form an outer shape of dimensions corresponding to the outer shape of a detection target, i.e. of a size substantially identical to the outer shape of the detection target, or of a size slightly larger or smaller than the outer shape of the detection target. For example, where the predetermined number is one, the outer shape of the one detection electrode 200a is of the size substantially identical to, or slightly larger or smaller than, the detection target (such as a finger tip or a nib of the stylus pen). The predetermined number of detection electrodes 200b in the counterpart area 110b, the predetermined number of detection electrodes 200c in the counterpart area 110c, and the predetermined number of detection electrodes 200d in the counterpart area 110d are also similarly defined. The predetermined number of detection electrodes herein means any optimum number (at least one) of detection electrodes for detecting a detection target.

As illustrated in Figs. 1A and 2, the conductive lines 300 are made of elongated transparent conductive film, metal such as silver (Ag), molybdenum (Mo), aluminum (Al), and copper (Cu), alloy of silver (Ag), palladium (Pd), and/or copper (Cu), etc. or metal wires. The transparent conductive film can be made of the same material as the transparent conductive film for the detection electrodes 200a to 200d. The conductive lines 300 are arranged at intervals on the base 100. The longitudinal first end of each conductive line 300 is connected to each detection electrode 200a to 200d. The longitudinal second end of each conductive line 300 is connected to the controller 400. The controller 400 is thus connected to the detection electrodes 200a to 200d via the conductive lines 300.

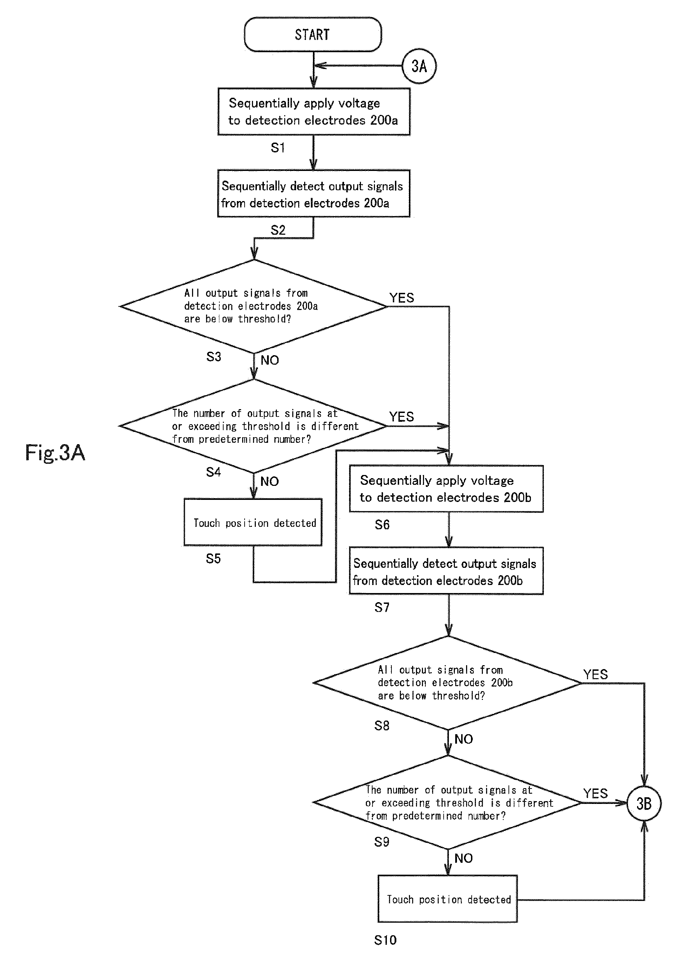

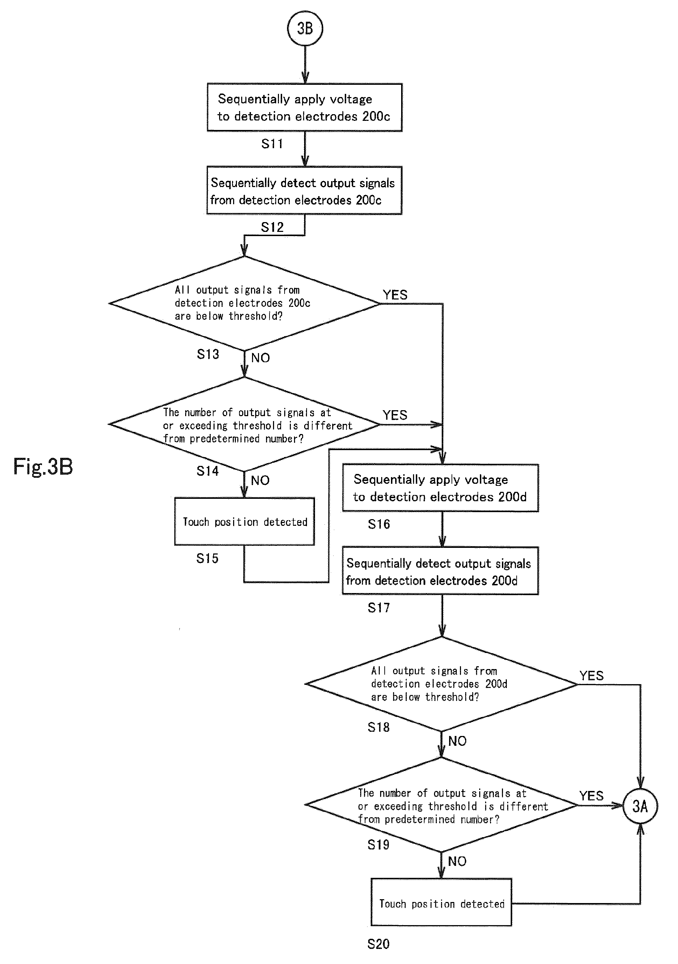

The controller 400 is a control circuit (control IC) to control the entire touch sensing device T. The controller 400 includes a memory (not shown) storing a computer program (See Figs. 3A and 3B) and processes the program to perform the function of controlling the entire touch sensing device T. The memory also stores respective threshold values for output signals from the detection electrodes 200a to 200d. The same threshold may be applied to all the detection electrodes 200a to 200d. Alternatively, a different threshold value may be applied to each detection electrode or each set of detection electrodes, namely, each electrode set 200a, 200b, 200c, and 200d. The memory also stores the above-described predetermined numbers of detection electrodes 200a to 200d for each of the respective detection areas 510a to 510d. The predetermined number may be the same for all detection areas. Alternatively, some detection areas may have a first predetermined number and others may have a different predetermined number, so that some detection areas may detect targets of a first size, and other detection areas may detect targets of a second, different size.

The controller 400 processes its computer program in the steps as shown in Figs. 3A and 3B. When the touch sensing device T is powered on, the controller 400 starts the operation of the program. First, as illustrated in Fig. 3A, the controller 400 switches a switch circuit therein to sequentially apply a predetermined voltage to the detection electrodes 200a (step S1). Then, output signals (voltages or currents) from the detection electrodes 200a are sequentially fed to the controller 400, which detects the output signals from the detection electrodes 200a (step S2). Then, the controller 400 determines whether all the output signals from the detection electrodes 200a are below the threshold stored in the memory (step S3). In other words, step S3 provides a judgment as to whether the output signals from all the detection electrodes 200a in the counterpart area 110a have changed to at least a predetermined degree.

When the controller 400 determines that all the output signals from the detection electrodes 200a are below the threshold, which means that the output signals from all the detection electrodes 200a in the counterpart area 110a have changed to a lesser degree than the predetermined degree, the controller 400 proceeds to the operation in step S6. When the controller 400 determines that all the output signals from the detection electrodes 200a are not below the threshold, which means that the output signal(s) from at least one of the detection electrodes 200a in the counterpart area 110a has changed to at least the predetermined degree, the controller 400 further determines whether, of all the output signals from the detection electrodes 200a, the number of output signals at or exceeding the threshold is different from the predetermined number (e.g. one) stored in the memory. This means that the controller 400 determines whether an output signal or signals from the predetermined number of detection electrode(s) 200a of all the detection electrodes 200a in the counterpart area 110a has changed (step S4).

More particularly, when the controller 400 determines that the number of output signal(s) at or exceeding the threshold is equal to the predetermined number, which means that an output signal or signals from the predetermined number of detection electrode(s) 200a in the counterpart area 110a has changed, the controller 400 judges that the detection area 510a corresponding to the counterpart area 110a is touched by a detection target (step S5). Then the controller 400 proceeds to the operation in step S6. When the controller 400 determines that the number of output signal(s) at or exceeding the threshold is different from (smaller than or larger than) the predetermined number, which means that a number different from the predetermined number of detection electrode(s) 200a in the counterpart area 110a has changed, the controller 400 directly proceeds to the operation in step S6. In other words, the number of output signal(s) at or exceeding the threshold is different from the predetermined number, the controller 400 treats that there are no output signals from the detection electrodes 200a. As is obvious, if the predetermined number is one, there is no number smaller than the predetermined number.

When a result of the determination in step S3 is "YES," when a result of the determination in step S4 is "YES," or when the operation in step S5 ends, the controller 400 proceeds to perform operations similar to those in steps S1 to S5 with respect to the detection electrodes 200b in the counterpart area 110b as illustrated in Fig. 3A (steps S6 to S10).

When a result of the determination in step S8 is "YES", or when a result of the determination in step S9 is "YES", or when the operation in step S10 ends, the controller 400 proceeds to perform operations similar to those in steps S1 to S5 on the detection electrodes 200c in the counterpart area 110c as illustrated in Fig. 3B (step S11 to S15).

When a result of the determination in step S 13 is "YES," or when a result of the determination in step S14 is "YES," or when the operation in step S 15 ends, the controller 400 proceeds to perform operations similar to those in steps S1 to S5 on the detection electrodes 200d in the counterpart area 110d as illustrated in Fig. 3B (step S16 to S20). When a result of the determination in step S18 is "YES," or when a result of the determination in step S19 is "YES," or when the operation in step S20 ends, the controller 400 returns to the operation in step S 1.

A method of using the touch sensing device T will be described below, assuming that the predetermined number is one. When a user touches the detection area 510a of the sensing face 501 of the cover panel 500 with a detection target, such as a finger or a stylus pen, the touch on the detection area 510a is detected if it is only one of the detection electrodes 200a in the counterpart area 110a corresponding to the detection area 510a that the output signal has changed to at least the predetermined degree.

At this point, there may exist a conductor other than an intended detection target (e.g. a palm of a user, hereinafter referred to as an "unintended conductor") on the Z-direction side of the detection area 510b, 510c, or 510d of the sensing face 501. For convenience of explanation, it is assumed that an unintended conductor exists on the Z-direction side of the detection area 510b of the sensing face 501 and that the unintended conductor is larger in outer dimensions than the detection target. Accordingly, electrostatic coupling is established between the unintended conductor and a larger number (than the predetermined number, which is one here) of detection electrodes 200b in the counterpart area 110b corresponding to the detection area 510b, and accordingly the electrostatic capacitances therebetween change. This causes output signals from the larger number of detection electrodes 200b to change to at least a predetermined degree. The controller 400 then determines that there are changes to at least the predetermined degree in output signals from a larger number, than the predetermined number, of detection electrodes 200b (step S10), the detection electrodes 200b are put into an off mode.

Touches on any one of the detection area 510b, 510c, or 510d in the sensing face 501 of the cover panel 500 are detected in a similar manner to a touch on the detection area 510a. In the case that an unintended conductor exists on the Z-direction side of the detection area 510a, 510c, or 510d of the sensing face 501, the unintended conductor is subjected to a similar process to the case of an unintended conductor located above the detection area 510b.

The touch sensing device T provides at least the following technical features and effects. First, it is possible for the following reason to reduce the possibility of falsely detecting a conductor other than a detection target even if enlarging the detection areas 510a to 510d of the sensing face 501 of the cover panel 500. The predetermined number of detection electrodes 200a to 200d, as a whole, have an outer shape of dimensions corresponding to the outer shape of the detection target. In the case where a detection target approaches one of the detection areas 510a to 510c, this approach changes an output signal or signals from the predetermined number of detection electrode(s) in the counterpart area corresponding to the detection area. In the case where a conductor of dimensions different from those of the detection target approaches one of the detection areas 510a to 510d, this approach changes an output signal or signals from a number different from the predetermined number, i.e. a smaller or lager number than the predetermined number, of the detection electrode(s) in the counterpart area corresponding to the detection area. Accordingly, the controller 400 concludes that the detection target approaches one of the detection areas 510a to 510d only when determining that an output signal or signals from the predetermined number of detection electrode(s) in the counterpart area has changed. When determining that an output signal or signals from a number different from the predetermined number of the detection electrode(s) in the counterpart area has changed, the controller 400 puts the detection electrodes into the off mode to prevent the false detection of the conductor of different size from that of the detection target.

Second, the controller 400 can be simplified in configuration. Particularly, the controller can be configured such as to at least detect that a detection target approaches one of the detection areas 510a to 510d when an output signal or signals from the predetermined number of detection electrodes 200a to 200d in the counterpart areas 110a to 110d corresponding to the concerned detection area has changed.

The touch sensing device of the invention is not limited to the above embodiment but may be modified in any manner without departing from the scope of the claims. Specific modifications will be described in detail below.

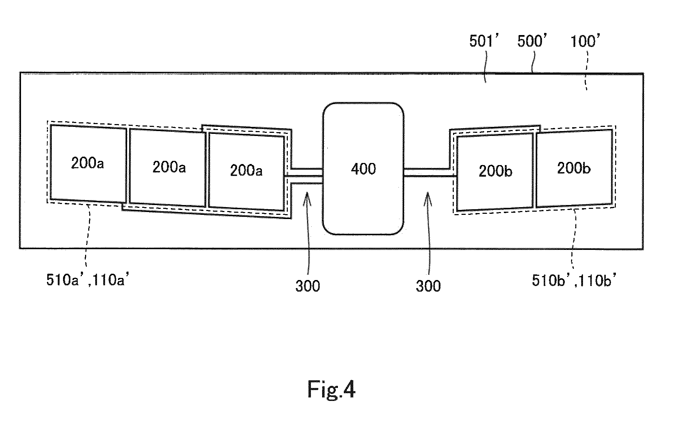

The touch sensing device of the invention may be any device for detecting approach of a detection target to a detection area of a sensing face, the touch sensing device including a base, a plurality of detection electrodes, and a controller of the above embodiment or variants to be described. The cover panel can be omitted in the invention. In this case, a touch sensing device without a cover panel can be incorporated in an electronic apparatus, a cover panel of which may be used as a cover panel for the touch sensing device. In this case, the cover panel of the electronic apparatus should be provided with a sensing face and a detection area for the touch sensing device. The invention requires at least one detection area. The detection area or areas of the invention may be modified in any manner if they are provided in the sensing face for detecting an approach of a detection target to the detection area or one of the detection areas. The detection areas of the invention may be of different sizes. An example of such modification is illustrated in Fig. 4. The variant touch sensing device as shown in Fig. 4 has a detection area 510a' larger than another detection area 510b'.

The base of the invention may be may be modified in any manner if it includes a counterpart area provided with a plurality of detection electrodes and the counterpart area is located at a position of the base corresponding to the detection area and on a deeper side in the touch sensing device relative to the detection area. The counterpart areas of the invention may be of different sizes, such as ones of the variant touch sensing device as shown in Fig. 4. Particularly, the variant touch sensing device includes a counterpart area 110a' larger than another counterpart area 110b'. Three detection electrodes 200a are provided at intervals in the counterpart area 110a', and two detection electrodes 200b are provided at intervals in the counterpart area 110b'. It should be appreciated that the variant in Fig. 4 includes a base 100', a cover panel 500', and a sensing face 501' of have the same configurations, except for their shapes, as the base 100, the cover panel 500, and the sensing face 501 of the above embodiment. Other components of the touch sensing device in Fig. 4 have the same configurations as those of the above embodiment.

The detection electrodes of the invention may be any electrodes arranged at intervals in the counterpart area of the base in any of the above aspects. The detection electrodes in each counterpart area may be of different shapes. In the counterpart area, some adjacent detection electrodes may be arranged at a different interval from other adjacent detection electrodes. The predetermined number of detection electrodes as a whole may or may not have an outer of dimensions corresponding to the outer shape of the detection target.

The controller of the invention may be any controller being connected to detection electrodes and configured to detect that a detection target approaches the detection area corresponding to the counterpart area when an output signal or signals from a predetermined number of detection electrode or electrodes of all the detection electrodes in the counterpart area has changed. The predetermined number is at least one. For example, when an output signal or signals from a number different from the predetermined number of the detection electrodes of all the detection electrodes in the counterpart area has changed, the controller may determine that an object other than the detection target approaches the counterpart area, or may pass such output signals to the ground.

The touch sensing device of the invention may further include a display part and serve as a touch screen. The touch screen may be an automated teller machine or a ticket vending machine, in which the detection area(s) of the sensing face in any of the above aspects may change in position, size, and/or number, as suitable for what to display on the display part. The counterpart area(s) may accordingly change in position, size, and/or number. In this case, the memory of the controller may hold prewritten data for the positions, the sizes, and/or the numbers of the detection area(s) and/or the counterpart area(s) to be selected according to what to display on the display part.

It should be appreciated that the materials, shapes, dimensions, numbers, arrangements, and other configurations of the constituents of the touch sensing devices in the above embodiment and modification examples may be modified in any manner if they can perform similar functions. The above embodiment and modification examples may be combined in any possible manner.

### Reference Signs List

T: touch sensing device
   100: base
      110a: counterpart area
      110b: counterpart area
      110c: counterpart area
      110d: counterpart area
   200a: detection electrode
   200b: detection electrode
   200c: detection electrode
   200d: detection electrode
   300: conductive line
   400: controller
   500: cover panel
      501: sensing face
      510a: detection area
      510b: detection area
      510c: detection area
      510d: detection area

## Claims

1. A touch sensing device (T) for detecting approach of a detection target to a detection area (510a, 510b, 510c, 510d; 510a', 510b') of a sensing face (501; 501'), the touch sensing device comprising:
a base (100; 100'), including a counterpart area (110a, 110b, 110c, 110d; 110a', 110b') at a position of the base corresponding to the detection area, the counterpart area being located on a deeper side in the touch sensing device relative to the detection area;
a plurality of detection electrodes (200a, 200b, 200c, 200d), arranged at intervals in the counterpart area on the base and configured such that an electrostatic capacitance between at least one of the detection electrodes and the detection target changes in response to an approach of the detection target to the at least one detection electrode so as to change an output signal from the at least one detection electrode; and
a controller (400) connected to the detection electrodes and configured to detect that the detection target approaches the detection area corresponding to the counterpart area when an output signal or signals from a predetermined number of detection electrode or electrodes of all the detection electrodes in the counterpart area has changed and to output a detection signal when a target approach is detected, the predetermined number being at least one.

2. The touch sensing device (T) according to claim 1, wherein
the predetermined number is at least two, and
the controller (400) is configured to detect that the detection target approaches the detection area (510a, 510b, 510c, 510d; 510a', 510b') corresponding to the counterpart area (110a, 110b, 110c, 110d; 110a', 110b') when output signals from the predetermined number of detection electrodes of all the detection electrodes (200a, 200b, 200c, 200d) in the counterpart area have changed.

3. The touch sensing device (T) according to claim 1 or claim 2, wherein:
the controller (400) includes a memory which stores a respective threshold value of output signal for each detection electrode,
and wherein the controller is configured to detect that the detection target approaches the detection area (510a, 510b, 510c, 510d; 510a', 510b') corresponding to the counterpart area (110a, 110b, 110c, 110d; 110a', 110b') when output signals from the predetermined number of detection electrodes of all the detection electrodes (200a, 200b, 200c, 200d) in the counterpart area equal or exceed their respective stored threshold values.

4. The touch sensing device (T) according to any one of the preceding claims, adapted to detect a detection target of a predetermined size, wherein the predetermined number of detection electrodes (200a, 200b, 200c, 200d) have an outer shape of dimensions corresponding to an outer shape of the detection target.

5. The touch sensing device (T) according to claim 4, wherein the detection electrodes (200a, 200b, 200c, 200d) are of substantially identical shape with each other and arranged at regular intervals in the counterpart area (110a, 110b, 110c, 110d; 110a', 110b') on the base (100; 100').

6. The touch sensing device (T) according to any one of the preceding claims, wherein:
the counterpart area (110a, 110b, 110c, 110d; 110a', 110b') of the base (100; 100') comprises a plurality of counterpart areas at positions of the base corresponding to a plurality of detection areas (510a, 510b, 510c, 510d; 510a', 510b'), the counterpart areas being located on a deeper side in the touch sensing device relative to the detection areas, and
the detection electrodes (200a, 200b, 200c, 200d) comprise a plurality of sets of detection electrodes, the detection electrodes of each set being arranged at intervals in each of the counterpart areas on the base.

7. The touch sensing device (T) according to any one of claims 1 to 6, further comprising a sensing face (501; 501'), wherein the sensing face includes a detection area (510a, 510b, 510c, 510d; 510a', 510b') for detecting approach of a detection target.

8. The touch sensing device (T) according to claim 6, further comprising a sensing face (501; 501'), wherein the sensing face includes a plurality of detection areas (510a, 510b, 510c, 510d; 510a', 510b') each for detecting approach of a detection target.

9. A touch sensing device (T) for detecting approach of a detection target to a detection area (510a, 510b, 510c, 510d; 510a', 510b') of a sensing face (501; 501'), the touch sensing device comprising:
a controller (400); and
a sensing face (501; 501'), wherein
the sensing face (501, 501') comprises a number of detection areas (510a, 510b, 510c, 510d) each defined by a plurality of detection electrodes (200a, 200b, 200c, 200d), configured such that an electrostatic capacitance between at least one of the detection electrodes and the detection target changes in response to an approach of the detection target to the at least one detection electrode so as to change an output signal from the at least one detection electrode; and
the controller (400) is connected to the detection electrodes and configured to detect that the detection target approaches the detection area when output signals from exactly a predetermined number of detection electrodes within the detection area has changed, the predetermined number being at least one.

10. A touch-sensing device (T) according to claim 9 wherein:
the controller (400) includes a memory which stores a respective threshold value of output signal for each detection electrode, and stores a predetermined number for each detection area,
and wherein the controller (400) is configured to output a detection signal when the output signals from exactly the predetermined number of detection electrodes in a detection area equal or exceed their respective threshold values.

11. A touch-sensing device (T) according to claim 9 or claim 10, for detecting the approach of a detection target of a predetermined size, wherein the total size of the predetermined number of detection electrodes in a detection area corresponds to the size of the detection target.

12. A touch-sensing device (T) according to any one of the preceding claims, wherein the controller (400) is configured to:
detect that the detection target approaches the detection area (510a, 510b, 510c, 510d; 510a', 510b') corresponding to the counterpart area (110a, 110b, 110c, 110d; 110a', 110b') when an output signal or signals from a predetermined number of detection electrode or electrodes of all the detection electrodes (200a, 200b, 200c, 200d) in the counterpart area has changed, and
output a detection signal when a target approach is detected.
